# EUROPEAN PATENT SPECIFICATION

(11) **EP 2 884 838 B1**
(45) Date of publication and mention of the grant of the patent: **10.10.2018**
(21) Application number: 13829719.7
(22) Date of filing: 16.08.2013
(51) Int. Cl.: A01K 1/00, A01K 1/06, A01K 15/00, A61D 3/00

(54) **IMPROVEMENTS IN ANIMAL HANDLING SYSTEMS**
VERBESSERUNGEN AN TIERHANDHABUNGSSYSTEMEN
AMÉLIORATIONS APPORTÉES À DES SYSTÈMES DE MANUTENTION D'ANIMAUX

(30) Priority: 16.08.2012 NZ 60187412; 25.07.2013 NZ 61360513
(43) Date of publication of application: 24.06.2015
(73) Proprietor: Highscene Limited, London EC2A 4DJ (GB)
(72) Inventor: FAGAN, Robin Christopher Feltrim, Hamilton 3204 (NZ)
(74) Representative: Laget, Jean-Loup
(86) International application number: PCT/NZ2013/000144
(87) International publication number: WO 2014/027901

(56) References cited:
- EP-A1- 0 920 807
- WO-A1-2012/107891
- DE-A1- 19 924 353
- FR-A1- 2 867 352
- GB-A- 2 392 367
- US-A- 4 328 643
- US-A1- 2002 179 022
- US-A1- 2006 048 715
- US-A1- 2006 112 904

## Description

### TECHNICAL FIELD

The present invention relates to animal handling systems. The invention has particular application to a handling system for use with livestock such as sheep.

### BACKGROUND ART

On most farms used for raising livestock, handling facilities are provided to assist in the care of the animals.

These handling facilities can include low and high density holding areas, a forcing area, a drafting race (used to help sort the animals,) as well as an animal handling device (to temporarily hold and secure individual animals for inspection and treatment as required).

These animal handling devices are essentially a clamp in the form of a base with a pair of opposing walls. One or both of the walls are arranged to pivot towards and away from each other. In this manner, an animal, standing on the base, can be clamped and immobilised. This allows the animal to be closely inspected or treated without the user having to physically hold and restrain the animal.

On many farms, animal handling devices are incorporated into fixed structures, such as stock yards, pens, and most commonly, races. A race is a portion of the yard used to channel livestock, such as a herd of sheep, into a single file of animals, thus allowing the selection of an individual sheep from the herd as it moves through the race.

The lead up is a part of the race and is an important part of the handling facility. It assists in the streamlining of the herd of livestock to be treated, usually sheep, into a single file or queue. The lead up is positioned before the animal handling device. Individual sheep will wait in the lead up while the preceding animal is inspected or treated in the animal handling device itself.

This makes it easier to select and inspect or treat individual sheep using the animal handling device.

However, sheep can behave unpredictably when stressed (such as when being forced to move en masse), and often individual sheep may need encouragement to move forward into the animal handling device from the lead up race.

This can be achieved manually through physically pushing or pulling the sheep forward but this may result in a potentially significant expenditure of energy by the person working with the animal handling device or the lead up race. It is also potentially time consuming as it can impact on the overall time required to process the herd of sheep..

When processing sheep, it is important that the flow of animals to the handling device is consistent.

However, while one animal is being processed by the handling device, the next animal, in the lead up, may attempt to back up the race. This may cause a bottleneck, disrupting processing of the herd of sheep, and can create additional stress for the remainder of the sheep awaiting treatment or inspection.

A race, or raceway, is described in European Patent Application No. 0920807 and is intended for use in a lairage for pigs. This discloses an urging device to encourage pigs within a compartment to move forward to a stunning unit.

A mobile race for cattle is described in French Patent Application No. 2867352 and includes an adjustable wall that may be used to vary the width of the race.

A transport trailer is described in German Patent Application No. 19924353 and is intended for use with horses. This discloses an enclosed trailer with a series of collapsible partitions forming cubicles for the horses when in transport.

It is an object of the present invention to address the foregoing problems or at least to provide the public with a useful choice.

Throughout this specification, the word "comprise", or variations thereof such as "comprises" or "comprising", will be understood to imply the inclusion of a stated element, integer or step, or group of elements integers or steps, but not the exclusion of any other element, integer or step, or group of elements, integers or steps.

Further aspects and advantages of the present invention will become apparent from the ensuing description which is given by way of example only.

### DISCLOSURE OF THE INVENTION

According to one aspect of the present invention, there is provided a portable animal handling system according to claim 1 wherein the system includes:
an animal clamp to temporarily restrain a first animal to trap and hold that animal, and
a race leading to the animal clamp,
wherein the race includes a holding device to temporarily restrain a second animal, the device including
a first wall, and
a second wall facing the first wall, defining a passageway in which the second animal may wait to access the animal clamp,
characterised in that
the first wall includes a panel, the panel configured to be pivotable about a vertical axis proximate the animal clamp, such that in use, the passageway to the animal clamp is substantially closed thereby restraining the animal waiting in the passageway, from moving in a direction away from the animal clamp.

According to another aspect of the present invention, there is provided a method according to claim 14 of using a portable animal handling system according to claim 1, the method including the step of:
a) actuating the panel of the first wall of the holding device such that it moves from a closed position, substantially in-line with the first wall, to an open position, such that the panel obstructs the passageway to the animal clamp, thereby restraining the animal waiting in the passageway from moving in a direction away from the animal clamp.

The present invention provides a holding device for use in the lead up section of an animal handling system. The holding device temporarily holds an animal in the lead up section of a race, preventing it from backing up out of the section, which can cause delays in the handling of a herd of livestock such as sheep.

An animal handling system should be understood to mean a structure which assists in the selection and sorting of livestock. It may include, but is not limited to, pens, gates, and a race. It may also include an animal clamp.

An animal clamp should be understood to mean an apparatus which temporarily traps and holds an animal to allow a number of treatments to be performed, including shearing, crutching, deworming, vaccination, veterinary assessment, pregnancy scanning, foot trimming, foot bathing and weighing of the animal. These are just some examples of treatment that may be performed on an animal held by an animal clamp and is not meant to be limiting.

The animal clamp is usually positioned at the end of a race.

A race should be understood to mean a passageway configured and dimensioned to encourage livestock to move from a massed herd of animals into a single file formation as the herd moves down the race towards the animal clamp.

The lead up of a race should be understood to mean the portion of the race proximate to the animal clamp. In use, the lead up is provided with gates or the like to force individual animals to wait prior to the clamp while an animal already in the clamp is treated and inspected. Once that animal is released, the animal in the lead up is allowed to move forward into the clamp.

The holding device of the present invention is located in the lead up of the race. However, this is not meant to be limiting, and persons skilled in the art will appreciate that the present invention may be used elsewhere in the animal handling system where it is desirable to prevent the animal from moving backwards.

In preferred embodiments of the present invention, the animal with which the invention is to be used is a livestock species, such as sheep.

Reference shall now be made throughout the remainder of this specification to the animal as being a sheep. However, this is not meant to be limiting, and the present invention may be used in the husbandry of other livestock species, such as pigs or goats.

The holding device includes a passageway. The passageway is defined by a first wall and a second wall, wherein the walls face each other. The walls have an inner side, which face each other, and an outer side.

In preferred embodiments of the present invention, the walls are defining a passageway that is approximately 0.45 to 0.5 metres wide. This width is sufficient to allow sheep to move forward through the passageway in single file.

However, persons skilled in the art will appreciate that this width is not meant to be limiting and the distance between the walls may depend on the species and age of the animals with which the invention is to be used.

In preferred embodiments of the present invention, the holding device includes a base, with the first and second walls arising from the base.

In preferred embodiments, the base substantially rectangular in plan view, with two short edges and two long edges in parallel. However, this is not meant to be limiting and other configurations for the base, such as a square shape in plan view, will be readily envisaged by persons skilled in the art.

In preferred embodiments, the first and second walls are joined or otherwise positioned along the longer edges of the base.

However, in some embodiments, there may be no base, and the first and second walls arise from the ground.

The first wall includes a barrier.

The barrier should be understood to mean a component or portion of the wall which is intended to prevent or obstruct rearward movement of the animal.

In preferred embodiments of the present invention, the barrier is a panel, and shall be referred to as such throughout the remainder of this specification. However, in some embodiments of the present invention, it will be appreciated that the barrier may be a frame like structure formed from vertical and horizontal metal tubing to form rails.

The panel has an inner side, which faces the passageway defined by the first and second walls and an outer side which faces the external environment in which the invention is being used.

Preferably, the panel is a flat piece of sheet material for maximum structural integrity. Having a continuous panel is useful as this means there are no gaps in the panel in which a leg or hoof may become inadvertently trapped.

The panel may be formed from any suitable material which is robust and hardwearing, including lightweight metal such as mild steel or aluminium but preferably is wood, such as plywood which is relatively inexpensive if it needs to be replaced. Another suitable material for the panel may be toughened plastics or the like. However these examples for choice of materials for the panel are not meant to be limiting.

For reinforcement, the panel may include lengths of metal tubing of circular or square section. The panel needs to withstand heavy wear and tear given it is likely to handle many thousands of sheep in its lifetime and may be exposed to inclement weather. However, as the inner side of the panel is likely to be in contact with sheep in use, it is preferable that if reinforcing tubing is present, it is on the outer side of the panel. This reduces the risk of the tubing injuring the sheep.

In preferred embodiments of the present invention, the panel is substantially rectangular and therefore has two opposing long sides and two opposing short sides. Preferably, the longer sides of the panel form the top and bottom of the panel in use.

However, this is not meant to be limiting and the longer sides of the panel may form the left and right sides of the panel in use. Panels of other shapes, such as square-shaped panels, may be used if desired.

In preferred embodiments of the present invention, the first wall is configured as a rectangular frame, with the panel disposed within the frame.

The frame is preferably formed from lengths of metal tubing of circular or square section for ease of manufacture. Like the panel, the frame needs to withstand heavy wear and tear. It will be understood that in this embodiment, the frame is mounted to one of the longer edges of the base.

However, in embodiments where no base is present, one or more of the vertical elements of the frame of the first wall may be anchored or partially embedded in the ground.

The panel has at least a first edge (the hinged end of the panel) and a second edge (the free end of the panel), the edges substantially opposing each other.

The panel is configured to pivot or hinge about a vertical axis at the first edge of the panel. Persons skilled in the art will appreciate that this may be achieved in a number of ways.

For example, the hinged end of the panel may be provided with pins. These pins engage with loops welded or otherwise mounted to a vertical member of the frame of the first wall. This may allow the panel to be easily lifted and removed from the wall if desired.

Alternatively, the hinged end of the panel may be mounted to the frame of the first wall with butt or barrel hinges or the like. In another embodiment of the invention, the panel may be hinged via an elongate axle. Persons skilled in the art will envisage a number of ways in which the panel may moveably mounted to the wall for back and forth movement.

In preferred embodiments of the present invention, the hinged end of the panel is proximate to the clamp.

It would be appreciated that, in use, the movement of the panel towards the opposing wall substantially closes the passageway defined between the first and second walls behind the sheep present in the lead up of the race. This prevents the sheep in the lead up from trying to reverse direction, effectively "holding" the sheep in place between the clamp and the panel. Depending on the position of the sheep within the lead up, the panel can also urge the sheep within the lead up forward and into the clamp by contacting it on its rear quarters.

Persons skilled in the art will appreciate that a closed position for the panel is when it is substantially in line with the first wall, allowing the formation of a passageway between the first and second walls through to the clamp. When the panel is open, it blocks the passageway.

It will be appreciated that the displacement of the panel away from the first wall effectively creates a gap between or behind the panel at its free or non-hinged end and the first wall.

The outer side of the first wall may include additional longitudinal lengths of tubing (effectively behind the panel and in line with the plane of the first wall) to close this area off, but it is possible when the panel is in an open position, thereby closing off the passageway, that sheep may move forward sufficiently to prevent the panel moving back into a closed position

Therefore, in preferred embodiments of the present invention, a length of flexible material is fixed along the second edge of the panel (which will be understood to be the free or non-hinged end of the panel) and the first wall. Reference shall now be made to this length of flexible material as being a flap.

When the panel is in an open position, the flap spans the gap between the free end of the panel and the first wall. The flap acts as a blind, preventing any sheep that is wanting to enter the lead up from behind the lead up device (i.e. from the race) being able to escape out the side of the lead up.

When the panel is in a closed position, the flap can fold upon itself allowing the panel to sit substantially flush within the first wall, thereby opening the passageway to allow sheep to pass through.

The flap may be formed from any suitable long-lasting material, such as canvas or nylon. In preferred embodiments of the present invention, the flap is fabricated from a sheet of rubber.

However, it is not beyond the scope of the present invention for the flap to be formed from a series of non-flexible panels, similar to a concertina door or the like. This confers a degree of flexibility to the flap, but may be more robust than sheet material.

In preferred embodiments of the present invention, the second wall is configured as a rectangular frame, with an overlying sheet of material such as mild steel or plywood or even toughened plastics material. The frame of the second wall is preferably formed from lengths of metal tubing of circular or square section for ease of manufacture.

It will be understood that in this embodiment, the frame of the second wall is mounted to one of the longer edges of the base.

However, in embodiments where no base is present, one or more of the vertical elements of the frame of the second wall may be anchored or partially embedded in the ground.

In preferred embodiments of the present invention, the handling device includes a displacement system.

A displacement system should be understood to mean any suitable mechanism configured to move the panel of the first wall relative to the second wall of the device, thereby opening or closing the passageway between the first and second walls.

It will be appreciated that the displacement system can take a number of forms.

For example, in some embodiments of the present invention, the displacement system is a handle or the like mounted to the upper portion of the panel. The handle may be gripped by a user in order to swing the panel away from the wall and into the passageway defined between the first and second walls. In these embodiments of the invention, there may be catches and loops or the like provided to temporarily hold the panel in a desired position.

In preferred embodiments of the present invention, the displacement system includes a user operable actuator such as a pneumatic ram or the like which may be used to move the panel relative to the first wall. Although the actuator shall now be referred to as a ram, this form of actuator is not meant to be limiting and persons skilled in the art will appreciate that other actuators may be used such as electro-servos and the like.

The displacement system may include a supply of compressed air or the like which is operable via a button or switch. The air causes movement of the ram when desired by the user of the invention. Other ways of operating the movement of the panel relative to the first wall will be readily envisaged by a person skilled in the art. For example, the actuator may include an electric motor or the like to move the ram.

The ram should be understood to include a piston or the like slideably moveable within a housing.

In preferred embodiments of the present invention, the housing is fixed to the base of the lead up and the end of the piston is fixed directly or indirectly to the panel.

However, persons skilled in the art will appreciate that this configuration could be reversed such that the end of the piston is fixed to the base and the housing of the ram is linked or mounted to the panel.

The inventor prefers having the displacement system under the base for aesthetic and efficiency reasons and to cover it as much as possible from inclement weather. In this embodiment, the axle of the panel is provided with an arm or the like with which the end of the piston engages. By careful positioning of the housing of the ram, and the position of the arm connected to the axle, maximum displacement of the panel can be achieved for minimal stroke of the piston.

However, in another embodiment, the housing is fixed to a non-moving part of the first wall while the end of the piston is fixed to the panel. In some embodiments, the end of the piston may be fixed to the hinge or axle of the panel if this is present.

The ram is arranged such that movement of the piston in and out of the housing causes movement of the panel from an open position (substantially closing the passageway) to a closed position (substantially opening the passageway).

Preferably, the housing is fixed to the base (or in some embodiments, the lower edge of a non-moving part of the wall) proximate the pivoting or hinged end of the panel.

Preferably, the piston is configured to be mounted to or otherwise be linked to the panel.

For example, the piston may be configured with a closed loop. A pin or the like on the panel, or an intermediary element of the panel, such as a lever, passes through the loop, linking the piston to the panel. Persons skilled in the art will envisage other ways in which the piston may be mounted to the panel.

In preferred embodiments of the present invention, the piston is linked to a lever which is fixed to a shaft arranged substantially vertically.

The shaft may pass through block mountings which are fixed to the lower and upper edges of the first wall, although it is able to rotate within the block mountings.

In this embodiment of the invention, the shaft is linked to a cam arrangement. Upon actuation of the ram, the lever rotates the shaft, thereby articulating the cam such that it bears against the panel. This moves the panel relative to the frame of the first wall.

The advantage of this arrangement is that the moving parts are able to be located on the exterior side of the wall, and base if present, and therefore out of the path of the sheep with which the present invention may be used.

Persons skilled in the art will appreciate that this configuration can be rearranged depending on the requirements of the user. For example, in some embodiments of the present invention, the piston may be connected directly to the shaft, thus doing away with the lever. However, it will be appreciated that the orientation of the piston may need to change in order to achieve this.

The above descriptions are just some of the ways the inventor envisages of moving the panel relative to the first wall, and persons skilled in the art will appreciate there are several other ways in which movement of the panel may be achieved. For example, these may include the use of counterweights or the like.

In some embodiments of the present invention, the holding device may include sensors to detect when a sheep is present in the lead up.

The sensor may take a number of forms, but could be a pressure pad in the base of the holding device. Alternatively, the sensor could be an infrared light sensor, which is activated upon the sheep breaking a beam of light. Another sensor that may be used, depending on the requirements of the user, are electronic ear tag readers.

In these embodiments of the invention, the displacement system may be linked to the sensor such when the presence of a sheep is detected, the panel is displaced in order to close the lead up to further sheep.

The second wall may also include a panel and frame, although it should be understood that the second wall is fixed relative to the first wall.

Reference has been made throughout this specification to the present invention being for used with fixed animal handling systems such as those found on farms.

However, this is not meant to be limiting, and the principles of the invention may be applied to portable animal handling devices which are provided with a lead up proximate to an animal clamp that may be positioned on a trailer or the like. In these embodiments, the present invention may include a base to which the first and second walls are mounted.

The present invention provides a number of advantages. In particular, it provides a means for:
- temporarily closing the lead up of the race to further animals while urging the animal within the race forward and into the clamp;
- reduces the need for operator input to move animals into the animal holding device;
- assists in the efficient and timely handling of animals in an animal handling system; or
- at the very least, the present invention offers the public a useful choice.

### BRIEF DESCRIPTION OF DRAWINGS

Further aspects of the present invention will become apparent from the following description which is given by way of example only and with reference to the accompanying drawings in which:
- Figure 1: shows a perspective view of one embodiment of the present invention in an open position;
- Figure 2: shows a perspective view of the embodiment of Figure 1 in a closed position;
- Figure 3: shows a perspective view of the underside of the embodiment of Figures 1 and 2;
- Figure 4: shows a perspective view of a second embodiment of the present invention; and
- Figure 5: shows a perspective view of one embodiment of the present invention as part of a portable animal handling device.

### BEST MODES FOR CARRYING OUT THE INVENTION

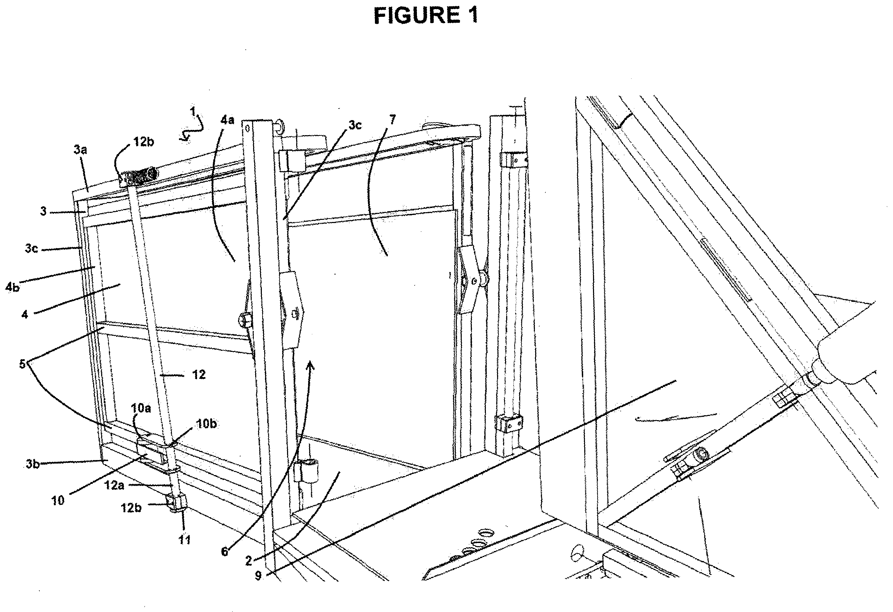

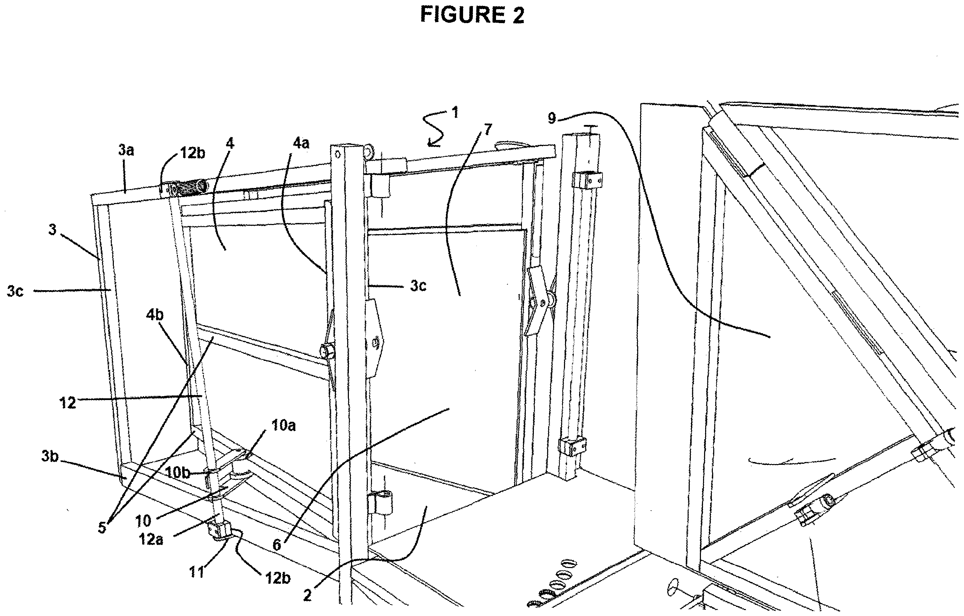

The present invention is illustrated in Figures 1 and 2 and is a holding device for a lead up of a race (generally indicated by arrow 1).

The holding device includes a base (2), which forms the floor of the lead up, and a first wall (3). The base may be formed from plywood or sheet metal for structural strength. The wall (3) is formed substantially as a frame of upper and lower elements (3a, 3b) linked by vertical elements (3c). Disposed within the first wall is a moveable panel (4) in the form of a sheet of plywood.

The panel (4) is reinforced with lengths of steel tubing (5) for rigidity.

It will be noted that the panel (4) is in line with the wall (3) and can be thought of as being in an open position. That is to say, the passageway (6) defined by the first wall and a second wall (7) is open to allow the passage of sheep (not shown) through the lead up of the race.

One end (4a) of the panel (4) is provided with pins (not shown). These pins engage with loops (not shown) welded or otherwise mounted to the vertical member (3c) of the frame (3a) of the wall (3) that is proximate the clamp (9).

It should be noted that for sake of clarity, hinging walls between the lead up (1) and the clamp (9) have been omitted.

At the opposing end (4b) of the panel (4) is provided a flap (not shown) blind, which is fabricated from a sheet of flexible material such as rubber.

The invention is provided with a camming mechanism (10) such that the panel (4) can move from an open position, as shown in Figure 1, to a closed position, preventing the sheep (not shown) from moving backwards in the passageway (6) of the lead up, as depicted in Figure 2.

The base (2) of the invention (1) includes a ram with a piston (not shown) mounted to a lever (11). The lever is fixed to the end (12a) of a strut (12) extending between the lower (3b) and upper elements (3a) of the frame of the wall (3).

Movement of the lever (11) causes rotational movement of the strut (12).

The strut is held relatively fixed to the wall (3) (although still able to rotate) by mounting blocks (12b).

At the centre of the strut is the camming mechanism (10). One end (10a) of the cam mechanism is fixed to the panel (4).

The other end (10b) of the camming mechanism (10) is fixed to the strut (12) such that as the strut is rotated, it moves from a position that is inline with the wall (3) (as represented in Figure 1) to a position that is at an angle to the wall (as represented in Figure 2).

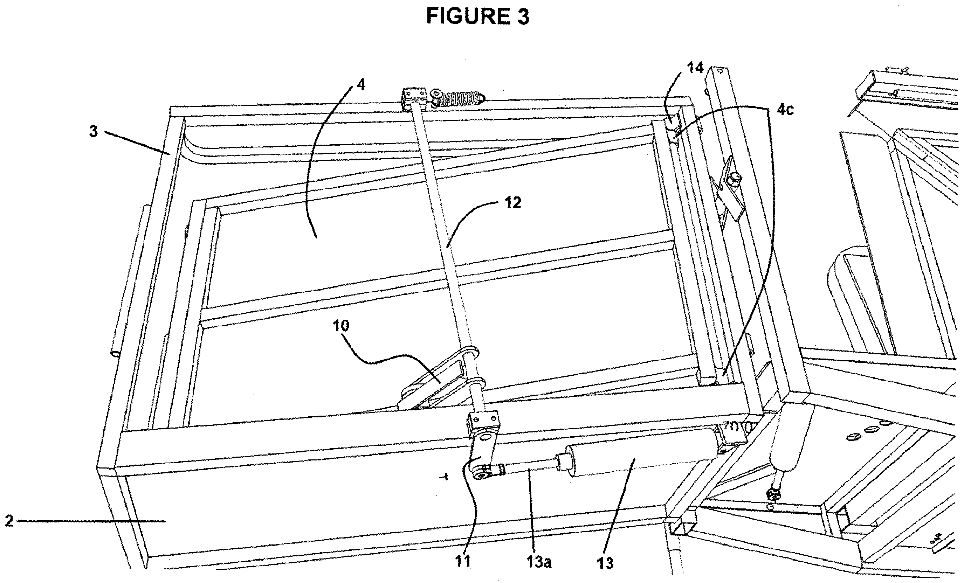

This can be better illustrated by Figure 3 showing the panel (4) in a closed position.

A ram (13) with a piston (13a) is mounted to the base (2). The piston in turn is connected to the lever (11) of the camming mechanism (10).

When the piston (13a) is retracted this moves the lever (11), and thereby causes rotation of the strut (12), and the camming mechanism (10) attached thereto.

This causes movement of the panel about its pins (4c) which engage with hinges (14) on the vertical elements (3c) of the wall (3), thereby closing the passageway defined by the first and second walls.

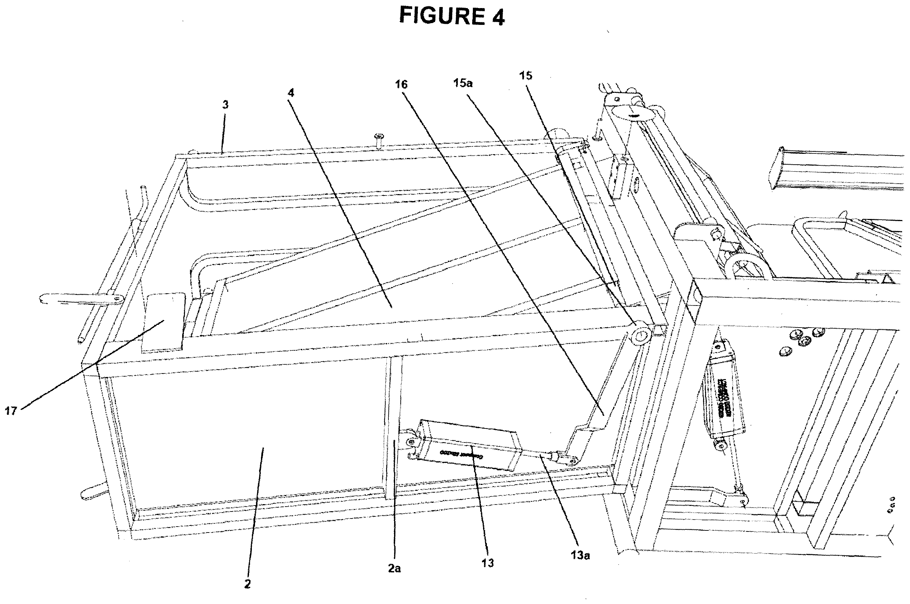

An alternative arrangement is depicted in Figure 4. In this embodiment, the ram (13) is directly under the base (2) and fixed to a strut (2a) spanning its width. The panel (4) is mounted to the first wall (3) via an elongate vertical axle (15). At its lower end (15a) the axle is fixed to an arm (16). The piston (13a) is connected to the arm. Movement of the piston into the ram will cause movement of the arm, which in turn, being fixed to the vertical axle, moves the panel (4) from an open position (as shown in this Figure) to an closed position (not shown).

Another feature not present in the previous embodiment described in Figures 1 to 3 include a stop (17), provided to prevent the panel (4) from moving outwards of the wall (3).

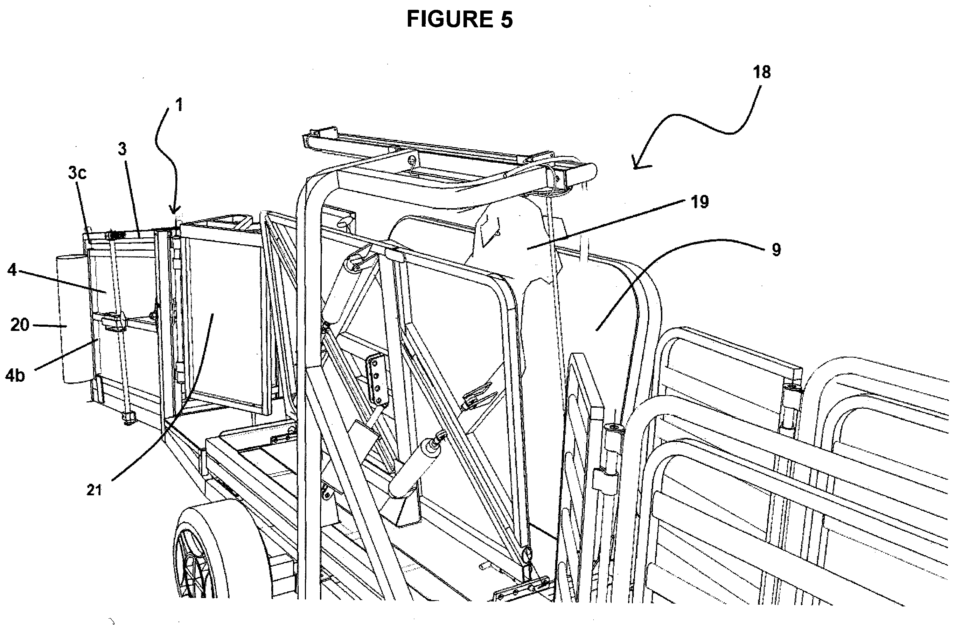

The present invention may be integrated into a fixed animal handling system, such as may be found on farms, or as part of a portable animal handling device (18) as depicted in Figure 5.

In Figure 5, the embodiment of the invention (1) illustrated in Figures 1 to 3 forms the lead up of the portable animal handling device (18).

The sheep to be sorted enter the lead up (1) of the animal handling device (18), and the panel (4) is activated to close the passageway behind it. This prevents the animal (not shown) in the lead up (1) from backing up while the animal (19) in the clamp (9) is being treated.

It will be noted that in this view, a flap blind (20) is visible. With one end connected to the vertical element (3c) of the wall (3) and the other to the free end of the panel (4b), the flap blind extends across the gap that would otherwise be formed when the panel (4) moves relative to the wall.

It will also be noted in this view that hinged walls or gates (21) are present between the lead up (1) and the clamp (9).

Aspects of the present invention have been described by way of example only and it should be appreciated that modifications and additions may be made thereto without departing from the scope thereof as defined in the appended claims.

## Claims

1. A portable animal handling system (18) wherein the system includes:
an animal clamp (9) to temporarily restrain a first animal (19) to trap and hold that animal, and
a race (1) leading to the animal clamp,
wherein the race includes a holding device to temporarily restrain a second animal, the device including
a first wall (3), and
a second wall (7) facing the first wall, defining a passageway (6) in which the second animal may wait to access the animal clamp,
**characterised in that**
the first wall includes a panel (4), the panel configured to be pivotable about a vertical axis proximate the animal clamp, such that in use, the passageway to the animal clamp is substantially closed thereby restraining the animal waiting in the passageway from moving in a direction away from the animal clamp.

2. The portable animal handling system (18) of claim 1, wherein the first wall (3) is configured as a rectangular frame, with the panel (4) disposed within the frame.

3. The portable animal handling system (18) of either claim 1 or claim 2 wherein the panel (4) has a first (4a) and second edge (4b) opposing each other, and wherein the panel is a flat piece of sheet material.

4. The portable animal handling system (18) of claim 3 wherein the first edge (4a) of the panel (4) is mounted to a vertical element of the first wall (3c) via an elongate axle.

5. The portable animal handling system (18) of claim 4 wherein the first edge (4a) of the panel (4) is mounted to a vertical element (3c) of the first wall (3) via:
• complementary pins (4c) and loops; or
• a hinge (14).

6. The portable animal handling system (18) of any one of claims 3 to 5 wherein a length of flexible material (20) is fixed along the second edge (4b) of the panel (4) and the first wall (3).

7. The portable animal handling system (18) of claim 6 wherein the flexible material (20) is a sheet of rubber.

8. The portable animal handling system (18) of any one of the preceding claims wherein the device includes a base (2), wherein the first (3) and second (4) walls are joined to the base.

9. The portable animal handling system (18) of claim 8 wherein the holding device includes a displacement system.

10. The portable animal handling system (18) of claim 9 wherein the displacement system includes an actuator.

11. The portable animal handling system (18) of claim 10 wherein the actuator includes a ram (13), wherein the ram includes a piston (13a) slideably disposed within a housing.

12. The portable animal handling system (18) of claim 11 wherein the piston (13a) is linked to the panel.

13. The portable animal handling system (18) of either claim 11 or claim 12 wherein the housing is linked to:
• the first wall (3); or
• the base (2).

14. A method of using a portable animal handling system (18) as claimed in claim 1, wherein the method includes the step of:
a) actuating the panel (4) of the first wall (3) of the holding device such that it moves from a closed position, substantially in-line with the first wall, to an open position, such that the panel obstructs the passageway (6) to the animal clamp (9), thereby restraining the animal waiting in the passageway from moving in a direction away from the animal clamp.

## Patentansprüche

1. Ein transportierbares Tierhandhabungssystem (18), wobei das System folgendes umfasst:
eine Tierklemme (9), um ein erstes Tier zeitweilig zurückzuhalten (19), um es zu fangen und festzuhalten, und
einen Lauf (1), der zur Tierklemme führt,
wobei der Lauf einen Zurückhaltemechanismus enthält, um ein zweites Tier zeitweilig zurückzuhalten, dieses Gerät enthält
eine erste Wand (3) und
eine zweite Wand (7) gegenüber der ersten, die eine Passage (6) definieren, in der das zweite Tier bis zum Zugang zur Tierklemme warten kann,
die folgendermaßen charakterisiert sind,
die erste Wand enthält ein Panel (4); das Panel ist derart konfiguriert, dass es sich um seine vertikale Achse unmittelbar neben der Tierklemme dreht, sodass im Betrieb die Passage zur Tierklemme im Wesentlichen versperrt ist, und dadurch das in der Passage wartende Tier daran gehindert wird, sich in eine Richtung weg von der Tierklemme zu bewegen.

2. Das transportierbare Tierhandhabungssystem (18) aus dem Anspruch 1, wobei die erste Wand (3) als rechteckiger Rahmen mit einem innerhalb des Rahmens angeordneten Panel (4) konfiguriert ist.

3. Das transportierbare Tierhandhabungssystem (18) aus den Ansprüchen 1 und 2, wobei das Panel (4) eine erste Kante (4a) und eine ihr gegenüberliegende Kante (4b) hat, und wobei das Panel ein flaches Stück aus Plattenmaterial ist.

4. Das transportierbare Tierhandhabungssystem (18) aus dem Anspruch 3, wobei die erste Kante (4a) des Panels (4) mittels einer Längsachse auf einem vertikalen Element der ersten Wand (3c) befestigt ist.

5. Das transportierbare Tierhandhabungssystem (18) aus dem Anspruch 4, wobei die erste Kante (4a) des Panels (4) auf einem vertikalen Element (3c) der ersten Wand (3) befestigt ist über
a) komplementäre Stifte (4c) und Ösen oder
b) ein Scharnier (14)

6. Das transportierbare Tierhandhabungssystem (18) aus allen Ansprüchen von 3 bis 5, wobei eine bestimmte Länge eines flexiblen Materials (20) entlang der zweiten Kante (4b) des Panels (4) und der ersten Wand (3) befestigt ist.

7. Das transportierbare Tierhandhabungssystem (18) aus dem Anspruch 6, wobei das flexible Material (20) eine Gummimatte ist.

8. Das transportierbare Tierhandhabungssystem (18) aus allen vorangehenden Ansprüchen, wobei das Gerät eine Basis (2) enthält, wobei die erste (3) und die zweite Wand (4) mit der Basis verbunden sind.

9. Das transportierbare Tierhandhabungssystem (18) aus dem Anspruch 8, wobei das Haltegerät eine Verstelleinrichtung enthält.

10. Das transportierbare Tierhandhabungssystem (18) aus dem Anspruch 9, wobei das Verstelleinrichtung einen Stellantrieb enthält.

11. Das transportierbare Tierhandhabungssystem (18) aus dem Anspruch 10, wobei der Stellantrieb einen Stößel (13) enthält, wobei der Stößel einen Kolben (13a) enthält, der gleitfähig in einem Gehäuse angeordnet ist.

12. Das transportierbare Tierhandhabungssystem (18) aus dem Anspruch 11, wobei der Kolben (13a) mit dem Panel verbunden ist.

13. Das transportierbare Tierhandhabungssystem (18) entweder aus dem Anspruch 11 oder dem Anspruch 12, wobei das Gehäuse verbunden ist mit:
a) der ersten Wand (3) oder
b) der Basis (2).

14. Eine Methode zur Verwendung des Tierhandhabungssystems (18) aus dem Anspruch 1, wobei die Methode den folgenden Schritt enthält:
a) betätigen des Panels (4) der ersten Wand (3) des Haltegerätes derart, dass es sich von einer geschlossenen Stellung, im Wesentlichen in Reihe mit der ersten Wand, zu einer offenen Stellung bewegt, sodass das Panel die Passage (6) zur Tierklemme (9) versperrt, und damit das in der Passage wartende Tier daran hindert, sich in eine Richtung weg von der Tierklemme zu bewegen.

## Revendications

1. Un système portable de manipulation d'animaux (18) qui inclut :
Une pince à animaux (9) pour immobiliser temporairement un premier animal (19) à enfermer et retenir cet animal et
Un corridor (1) qui mène à la pince à animaux,
Où le corridor inclut un dispositif de maintien qui immobilise temporairement un second animal, le dispositif incluant
Une première paroi (3) et
Une seconde paroi (7) en face de la première définissant ainsi un couloir (6) dans lequel le second animal peut attendre pour accéder à la pince à animaux,
Ce couloir se **caractérise par**
Sa première paroi qui inclut un panneau (4), le panneau est configuré pour être pivotable sur un axe vertical près de la pince à animaux, de façon qu'au moment de son utilisation, le couloir allant vers la pince à animaux est pratiquement fermé empêchant ainsi l'animal qui attend dans le couloir de s'éloigner de la pince à animaux.

2. Le système portable de manipulation d'animaux (18) de la revendication 1 dans lequel la première paroi (3) est configurée à l'aide d'un cadre rectangulaire avec un panneau (4) placé à l'intérieur du cadre.

3. Le système portable de manipulation d'animaux (18) de la revendication 1 ou de la revendication 2 dans lequel le panneau (4) comporte un premier bord (4a) et un deuxième bord (4b) qui sont en face l'un de l'autre, le panneau constituant donc une pièce plate de matériau.

4. Le système portable de manipulation d'animaux (18) de la revendication 3 dans lequel le premier bord (4a) du panneau (4) est monté sur une pièce verticale de la première paroi (3c) via un essieu de forme allongée.

5. Le système portable de manipulation d'animaux (18) de la revendication 4 dans lequel le premier bord (4a) du panneau (4) est monté sur une pièce verticale (3c) de la première paroi (3) via :
a) Des tiges complémentaires (4c) et des boucles ou
b) Une charnière (14).

6. Le système portable de manipulation d'animaux (18) d'une des revendications 3 à 5 dans lequel une pièce longue de matériau flexible (20) est fixé le long du deuxième bord (4b) du panneau et de la première paroi (3).

7. Le système portable de manipulation d'animaux (18) de la revendication 6 dans lequel le matériau flexible (20) est une feuille de caoutchouc.

8. Le système portable de manipulation d'animaux (18) de n'importe laquelle des revendications ci-dessus dans lequel le dispositif inclut une base (2) et où les première (3) et deuxième (4) parois sont connectées à la base.

9. Le système portable de manipulation d'animaux (18) de la revendication 8 dans lequel le dispositif d'immobilisation inclut un système de déplacement.

10. Le système portable de manipulation d'animaux (18) de la revendication 9 dans lequel le système de déplacement inclut un actionneur.

11. Le système portable de manipulation d'animaux (18) de la revendication 10 dans lequel l'actionneur inclut un vérin (13) et ce vérin inclut un piston (13a) qui peut glisser à l'intérieur d'un boitier.

12. Le système portable de manipulation d'animaux (18) de la revendication 11 dans lequel le piston (13a) est lié au panneau.

13. Le système portable de manipulation d'animaux (18) de la revendication 11 ou de la revendication 12 dans lequel le boitier est lié à :
• À la première paroi (3) ou
• À la base (2).

14. Une méthode d'utilisation du système portable de manipulation d'animaux (18) de la revendication 1 qui inclut l'étape suivante :
a) Actionner le panneau (4) de la première paroi (3) du dispositif d'immobilisation de façon qu'il passe d'une position fermée, pratiquement aligné avec la première paroi, à une position ouverte de façon que le panneau obstrue le couloir (6) allant vers la pince à animaux (9), empêchant ainsi l'animal qui attend dans le couloir de se déplacer vers la pince à animaux.
